# EUROPÄISCHE PATENTSCHRIFT

(11) **EP 2 363 726 B1**
(45) Veröffentlichungstag und Bekanntmachung des Hinweises auf die Patenterteilung: **20.09.2017**
(21) Anmeldenummer: 11156147.8
(22) Anmeldetag: 28.02.2011
(51) Int. Cl.: G01S 7/481

(54) **Kompakter Laser-Entfernungsmesser**
Compact laser rangefinder
Dispositif de mesure d'éloignement à laser compact

(30) Priorität: 01.03.2010 DE 102010010097
(43) Veröffentlichungstag der Anmeldung: 07.09.2011
(73) Patentinhaber: JENOPTIK Advanced Systems GmbH, 22880 Wedel (DE)
(72) Erfinder: Jünemann, Otto, 07751 Bucha (DE); Schaller, Uwe, 07768 Kahla (DE); Schmidt, Dieter, 07552 Gera (DE)
(74) Vertreter: Schaller, Renate

(56) Entgegenhaltungen:
- EP-A1- 0 718 974
- EP-A1- 0 875 770
- DE-A1- 10 331 074
- DE-U1- 20 221 470
- JP-A- 1 124 788
- US-A- 3 697 762
- US-A- 5 812 893
- US-B1- 6 972 834

## Beschreibung

Die Erfindung betrifft einen Laser-Entfernungsmesser, wie er gattungsgemäß aus der DE 103 31 074 A1 bekannt ist.

Laser-Entfernungsmesser arbeiten bevorzugt nach dem Prinzip der Impulslaufzeitmessung. Sie senden einen Laserimpuls in Richtung eines anzumessenden Zieles aus, empfangen einen am Ziel reflektierten Strahlungsenergieanteil des Laserimpulses und ermitteln aus der Laufdauer des Laserimpulses und der Lichtgeschwindigkeit die Entfernung des angemessenen Zieles vom Laser-Entfernungsmesser.

Derartige Laser-Entfernungsmesser bestehen im Wesentlichen aus einem Sendekanal mit einer Sendeachse und einem Empfangskanal mit einer Empfangsachse, wobei die Sende- und Empfangsachse zueinander parallel ausgerichtet sind.
Der Sendekanal umfasst als Komponenten einen Lasersender, z. B. eine Laserdiode und eine Sendeoptik, in deren Brennebene der Lasersender angeordnet ist. Durch die Position und die Ausrichtung des Lasersenders und der Sendeoptik wird die Lage der Sendeachse, die durch den Hauptpunkt der Sendeoptik und den Mittelpunkt des Lasersenders verläuft, bestimmt.
Der Empfangskanal umfasst als Komponenten einen Empfänger, z. B. eine Photodiode und eine Empfangsoptik, in deren Brennebene der Empfänger angeordnet ist. Durch die Position und die Ausrichtung des Empfängers und der Empfangsoptik wird die Lage der Empfangsachse, die durch den Hauptpunkt der Empfangsoptik und den Mittelpunkt des Empfängers verläuft, bestimmt.
Zur Strahlumlenkung können in den Kanälen strahlumlenkende Elemente, z. B. Spiegel angeordnet sein.
Es ist dem Fachmann klar, dass unter der Sendeoptik bzw. der Empfangsoptik alle an der Strahlformung beteiligten optischen Elemente des Sende- bzw. des Empfangskanals gemeint sind. Meistens handelt es sich hierbei lediglich um Einzellinsen, es können aber auch Baugruppen aus mehreren Linsen sein, insbesondere sogenannte Kittgruppen.
Für die Reichweite und die Genauigkeit der Entfernungsmessung ist es erforderlich, dass die Sende- und die Empfangsachse zueinander exakt ausgerichtet sind und diese Ausrichtung dauerhaft, unabhängig von mechanischen und thermischen Einflüssen, stabil bleibt. Je größer die zu messenden Entfernungen sind desto höher sind die Genauigkeitsanforderungen hierfür.

Aus dem Stand der Technik sind eine Vielzahl von Laser-Entfernungsmessern bekannt, auf die die vorangehende Beschreibung zutrifft und die deshalb zu einem erfindungsgemäßen Laser-Entfernungsmesser als gattungsgemäß gleich zu betrachten sind. Die Offenbarungen zu solchen Laser-Entfernungsmessern beschränkt sich jedoch häufig nur auf Prinzipanordnungen und nicht auf die konkrete konstruktive Ausführung, mit der letztendlich die Ausrichtung und Stabilisierung der beiden Achsen realisiert wird.

Die US 5,812,893 offenbart einen Laser-Entfernungsmesser mit einem Sender und einem Empfänger, die gegenüberliegend auf entgegengesetzten Seiten einer flexiblen Leiterplatte unmittelbar auf dieser montiert angeordnet sind. Die Leiterplatte ist in einem Gehäuse gefasst, das als Träger einer Sendelinse und einer Empfangslinse sowie zweier Umlenkspiegel dient.
Indem der Sender und der Empfänger auf jeweils einer anderen Seite der lichtundurchlässigen Leiterplatte angeordnet sind, können sie räumlich nah beieinander montiert werden, ohne dass auf den Empfänger direkte Strahlung oder Streustrahlung vom Sender fallen kann. Damit kann auf Mittel zur Abschirmung des Empfängers verzichtet werden und der Laser-Entfernungsmesser kann kleiner und kompakter ausgeführt werden. Aus der Beschreibung der US 5,812,893 kann nicht entnommen werden, wie die Justierung erfolgt. Es gibt auch keine Hinweise auf getroffene Maßnahmen, die einer thermischen und mechanischen Stabilität dienen.

Aus der DE 10 2005 041 998 A1 ist ein Laser-Entfernungsmesser bekannt mit einem Optikträger, an dem eine Aufnahme für eine Empfangsoptik (hier Empfangslinse) sowie Führungsmittel und Befestigungsmittel zum Verschieben und Fixieren einer Leiterplatte vorhanden sind, auf der ein Lasersender (hier Sender) eine Sendeoptik (hier Kollimationsoptik) und ein Empfänger vormontiert sind. Nach dem Einsetzen der Empfangslinse in die Aufnahme wird die Leiterplatte in z-Richtung innerhalb des Optikträgers verschoben, bis der Empfänger in etwa im Brennpunkt der Empfangslinse zum Liegen kommt, und fixiert.

Anschließend wird die Empfangslinse in Richtung der x- und y-Achse lateral solange verschoben, bis die Empfangsachse in einer bestimmten Entfernung vom Entfernungsmesser entfernt zentrisch auf die Sendeachse des biaxialen Systems blickt, und anschließend in der Aufnahme z. B. durch eine Klebung fixiert.
Die Sendeachse und die Empfangsachse sind damit zueinander parallel ausgerichtet.

Durch die Montage der elektronischen Komponenten und der elektro-optischen Komponenten, nämlich des Senders und des Empfängers, auf einer Leiterplatte können die elektrischen Verbindungen zwischen den Komponenten als Leiterbahnen innerhalb der oder auf der Leiterplatte geführt werden. Die Komponenten sollen vorteilhaft gemeinsam auf einer Leiterplattenseite montiert werden, um sie zwischen der Leiterplatte und dem Optikträger geschützt anzuordnen.

Der Optikträger mit montierter und justierter Leiterplatte sowie justierter Abbildungsoptik kann nunmehr in ein Gehäuse eines Messgerätes eingeschoben werden.
Da sowohl der Empfänger als auch der Sender mit der Kollimationsoptik auf der Leiterplatte vormontiert sind und keine zusätzlichen Umlenkspiegel verwendet werden, kann ein kompaktes Messgerät mit einer nur geringen Baugröße realisiert werden.

Aus der DE 10 2005 041 998 A1 ist weder zu entnehmen, wie der Empfänger, der gemeinsam mit dem Sender auf einer Seite einer Leiterplatte angeordnet ist, vor Streustrahlung geschützt wird, noch gibt es Hinweise, welche Maßnahmen für eine thermische Stabilität getroffen werden. Die mechanische Stabilität wird über den Optikträger realisiert, der im Wesentlichen plattenförmig ausgebildet ist und an seinen gegenüberliegenden Längsseiten Versteifungsrippen aufweist, zwischen denen sich die Befestigungen für die Leiterplatte befinden.

Aus der DE 103 31 074 A1 ist eine Sensoranordnung zur Abstandsmessung bekannt, die im Innenraum eines Fahrzeuges hinter einer Fensterscheibe angeordnet ist. Aus deren Verwendung ergibt sich, dass sie für nur kurze zu messende Entfernungen konzipiert ist. Die Sensoranordnung ist in einem Gehäuse untergebracht, welches mit der Befestigung an der Fensterscheibe durch diese verschlossen wird. Die Sendeanordnung umfasst einen Sendekanal und einen Empfangskanal, die jeweils auf einer anderen Seite einer für die Strahlung des Senders undurchlässigen Leiterplatte angeordnet sind. Betreffs der Befestigung der einzelnen Komponenten der beiden Kanäle lässt sich lediglich aus den Zeichnungen entnehmen, dass der Sender, beispielsweise eine Laserdiode, direkt auf der Leiterplatte montiert ist und die Linsenanordnung der Empfangseinheit in das Gehäuse eingepasst ist. Das Gehäuse dient als das der Sendeanordnung seine mechanische Stabilität gebende Bauteil.

Der Erfindung liegt die Aufgabe zu Grunde, einen noch kleineren und kompakteren Laser-Entfernungsmesser zu schaffen, der eine hohe mechanische und thermische Stabilität aufweist, damit dieser insbesondere für die Messung großer Entfernungen geeignet ist und als Modul in komplexe Geräte einsetzbar ist.

Die Aufgabe der Erfindung wird für einen Laser-Entfernungsmesser mit einem Sendekanal umfassend einen Lasersender und eine Sendeoptik, die gemeinsam eine Sendeachse definieren, und einem Empfangskanal umfassend einen Empfänger und eine Empfangsoptik, die gemeinsam eine Empfangsachse definieren, die zur Sendeachse parallel ausgerichtet ist, sowie einer für die Strahlung des Lasersenders undurchlässige Leiterplatte, auf der der Lasersender und der Empfänger befestigt sind, wobei der Lasersender und die Sendeoptik auf einer Seite der Leiterplatte und der Empfänger und die Empfangsoptik auf der anderen Seite der Leiterplatte angeordnet sind dadurch gelöst, dass die Leiterplatte eine mehrlagige formstabile Basis-Leiterplatte ist, die dem Laser-Entfernungsmesser seine mechanische Stabilität gibt und auf der alle Komponenten des Laser-Entfernungsmessers befestigt sind..
Die Basis-Leiterplatte ist nicht nur wie üblich die Montagebasis für elektronische und elektro-optische Komponenten, die untereinander über integrierte Leiterzüge miteinander verbunden werden können, sondern sie dient auch als mechanischer Grundkörper, der dem Laser-Entfernungsmesser seine Stabilität gibt und auf dem alle Komponenten des Laser-Entfernungsmessers, auch die optischen Komponenten, wie die Sende- und die Empfangsoptik, montiert sind.

Die Basis-Leiterplatte ist formstabil, d. h. mögliche Formabweichungen, z. B. durch ein Verziehen oder Verbiegen sind so gering, dass die Lage der Sendeachse und der Empfangsachse zueinander in Toleranz bleibt.
Neben der elektrischen und der mechanischen Funktion hat die Basis-Leiterplatte eine optische Funktion. Zwischen dem Lasersender und dem Empfänger angeordnet, verhindert sie, da sie für die Strahlung des Lasersenders undurchlässig ist, das Auftreffen von direkter oder indirekter Strahlung des Lesersenders. Es müssen daher nicht wie sonst üblich zusätzliche Maßnahmen zur Abschirmung des Empfängers getroffen werden.
Indem die Basis-Leiterplatte wie beschrieben ausgeführt wird, kann ein mechanisch stabiler und kompakter Laser-Entfernungsmesser geschaffen werden.
Der Laser-Entfernungsmesser kann in ein Gehäuse eingesetzt werden, welches dann nur eine Schutzfunktion übernimmt.
Vorteilhaft sind auf der Basis-Leiterplatte Montagelöcher vorgesehen, um den Laser-Entfernungsmesser als Modul in ein komplexes Gerät einzusetzen und dort fixieren zu können.
Auf der Basis-Leiterplatte sind zum Befestigen des Lasersenders und des Empfängers Lötpunkte vorgesehen, die eine Ausdehnung größer einem zur Justierung des Lasersenders und des Empfängers notwendigen Justierbereiches aufweisen, und der Lasersender und der Empfänger sind jeweils mittelbar über eine Aufsatz-Leiterplatte mit den Lötpunkten verbunden.
Damit die Sendeachse und die Empfangsachse zueinander parallel verlaufen, müssen der Lasersender, die Sendeoptik, der Empfänger und die Empfangsoptik in einer vorgegebenen Lage und Ausrichtung zueinander angeordnet sein. Um diesen Zustand zu erreichen, werden die Sendeoptik und die Empfangsoptik über eine Klebeverbindung auf der Basis-Leiterplatte befestigt, und der Lasersender und der Empfänger werden hierzu so positioniert und ausgerichtet, dass deren Mittelpunkte in der Brennebene der Sende- bzw. der Empfangsoptik jeweils gemeinsam mit den Hauptpunkten der Sende- bzw. der Empfangoptik auf zwei zueinander parallelen Geraden liegen, welche die Sendeachse und die Empfangsachse definieren.

Empfänger, innerhalb eines vorgegebenen Justierbereiches, der durch die Lagetoleranz der Sendeoptik und Empfangsoptik bestimmt ist, zur Senderoptik bzw. Empfangsoptik in Richtung aller drei Raumachsen, x, y und z, zu verschieben.
Damit die einjustierten Aufsatz-Leiterplatten und damit der einjustierte Lasersender bzw. der einjustierte Empfänger in seiner Justierlage fixiert werden können, sind auf der Basis-Leiterplatte Lötpunkte vorgesehen, die eine solche flächenmäßige Ausdehnung in x- und y-Richtung auf der Oberfläche der Basis-Leiterplatte aufweisen, dass sich die beiden Aufsatz-Leiterplatten, auf denen der Lasersender bzw. der Empfänger montiert sind, in der Justierlage direkt oberhalb der Lötpunkte befinden.
Die Aufsatz-Leiterplatten können dann in der Justierlage fixiert werden, indem die Aufsatz-Leiterplatten mit den Lötpunkten mittels Lot verbunden werden, wobei mit einer entsprechend großen Menge von Lot die Aufsatz-Leiterplatten auch mit einem Abstand von den Lötpunkten in z-Richtung mechanisch fest verlötet werden können. Indem der Lasersender und der Empfänger nicht unmittelbar auf die Basis-Leiterplatte aufgelötet werden, werden sie weniger thermisch belastet. Vorteilhaft sind der Lasersender und der Empfänger so auf den Aufsatz-Leiterplatten montiert, dass sie senkrecht zur jeweiligen Aufsatz-Leiterplatte Strahlung aussenden bzw. empfangen, sodass die Aufsatz-Leiterplatten wiederum vorteilhaft senkrecht auf die Basis-Leiterplatte aufgesetzt werden. Der Platzbedarf auf der Basis-Leiterplatte erstreckt sich damit nur auf den Platz für die Lötpunkte.
Auf die Aufsatz-Leiterplatten sind vorteilhaft auch die zum Betreiben des Lasersenders bzw. des Empfängers unmittelbar notwendigen Bauelemente aufgebracht wie Ansteuerelemente oder eine Verstärkerstufe.

Vorteilhaft sind der Lasersender und der Empfänger, die Sendeoptik und die Empfangsoptik und gegebenenfalls weitere Komponenten in einer spiegelsymmetrischen Lage zur Basis-Leiterplatte angeordnet, um die Basis-Leiterplatte beidseitig gleichmäßig mechanisch und thermisch zu belasten. Es wird so vermieden, dass sich die Basis-Leiterplatte infolge der örtlichen Erwärmung durch die Verlustleistung elektrischer oder elektro-optischer Komponenten und der Erwärmung der optischen Komponenten durch die Beaufschlagung mit Wäremstrahlung auf seinen beiden Seiten unterschiedlich erwärmt und infolgedessen verzieht.

Vorteilhaft besteht die Basis-Leiterplatte aus mehreren sich abwechselnden elektrisch nicht leitenden und elektrisch leitenden Schichten, wobei wenigstens eine der elektrisch leitenden Schichten eine innen liegende, durchgängige Kupferschicht ist, die als optische und elektrische Abschirmschicht zwischen den auf den unterschiedlichen Seiten der Basis-Leiterplatte angeordneten Komponenten dient.

Als vorteilhaft geeignetes Material für die elektrisch nicht leitenden Schichten hat sich glasfaserverstärktes Epoxydharz herausgestellt. Hiermit lassen sich Leiterplatten besonders hoher Stabilität kostengünstig herstellen. In einer nicht beanspruchten Abwandlung kann die Leiterplatte auch zusätzlich zu den elektrischen Leiterzügen, mit denen die elektrischen und elektro-optischen Komponenten bestimmungsgemäß untereinander bzw. mit einer Schnittstelle verbunden sind, auch optische Leiterzüge aufweisen. Der Lasersender und der Empfänger könnten dann körperlich an einem beliebigen Ort auf oder auch in der Basis-Leiterplatte untergebracht sein und in der Brennebene der Sendeoptik bzw. der Empfangsoptik sind lediglich eine in Strahlungsrichtung nachgelagerte Strahlungsaustrittsöffnung bzw. eine vorgelagerte Strahlungseintrittsöffnung mit dem Lasersender bzw. dem Empfänger verbundener optischer Leiterzüge vorgesehen. Da es für die Funktion eines Laser-Entfernungsmessers keinen Unterschied macht, ob der Lasersender bzw. der Empfänger selbst körperlich in der Brennebene der Sende- bzw. der Empfangsoptik steht oder eine hierzu konjugierte Ebene, sind die beiden Ausführungen zueinander technisch äquivalent. Bei einer solchen Ausführung lassen sich vorteilhaft die beiden Aufsatz-Leiterplatten verkleinern.

Um durch Verlustleitung entstehende Wärme abzuführen, sind freie Oberflächenbereiche, auf denen keine Komponenten angeordnet sind, mit einer äußeren Kupferschicht überzogen, die als Wärmesenke wirkt und die mit der innen liegenden Kupferschicht verbunden ist. In einer nicht beanspruchten Abwandlung kann die Leiterplatte auch optische Leiterzüge aufweisen. Damit können der Lasersender und der Empfänger körperlich an einem beliebigen Ort auf oder in der Basis-Leiterplatte untergebracht sein und in der Brennebene der Sendeoptik ist anstelle des Lasersenders eine in Strahlungsrichtung nachgelagerte Strahlungsaustrittsöffnung eines mit dem Lasersender verbundenen optischen Leiterzuges vorgesehen. In der Brennebene der Empfangsoptik ist dann anstelle des Empfängers eine vorgelagerte Strahlungseintrittsöffnung eines mit dem Empfänger verbundenen optischen Leiterzuges vorgesehen. Optisch handelt es sich hierbei um äquivalente Lösungen.

Die Wärme, die von den Komponenten in die Basis-Leiterplatte abgeleitet wird, wird über die innen liegende, durchgehende Kupferschicht zur Wärmesenke geleitet und von dieser abgestrahlt.

Vorteilhaft sind auf der Basis-Leiterplatte Steckverbinder vorgesehen, über die der Laser-Entfernungsmesser mit einem Rechner und einer Stromversorgung verbunden werden kann.

Insbesondere im Interesse einer Gewichtsreduzierung bestehen die Sendeoptik und die Empfangsoptik vorteilhaft aus transparentem Polymer, z. B. Acryl. Sie weisen an der Umfangsfläche eine ebenflächige Phase auf, mit der sie jeweils auf die Basis-Leiterplatte aufgeklebt sind. Der Abstand zwischen Sende- und Empfangsachse kann auf diese Weise im Vergleich zu üblicherweise gefasster Optik verringert werden.

Die Erfindung soll nachfolgend anhand eines Ausführungsbeispiels näher erläutert werden. Hierzu zeigt:

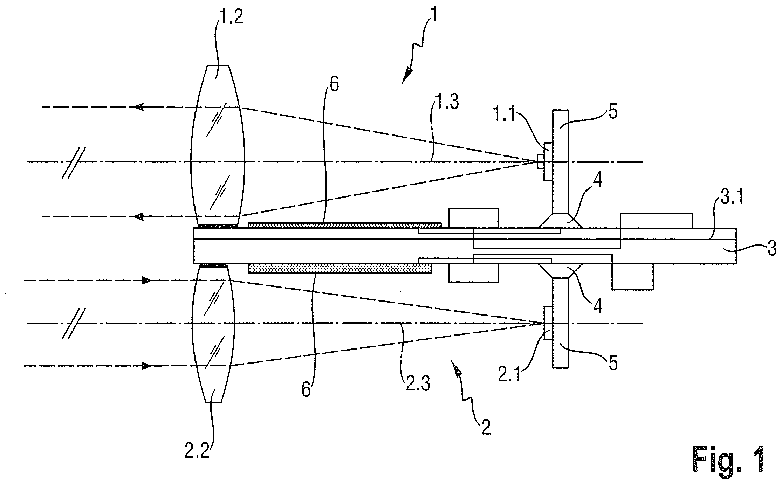

Fig. 1 einen Prinzipaufbau eines Laser-Entfernungsmessers

Der in Fig. 1 mit seinen wesentlichen Merkmalen dargestellte Laser-Entfernungsmesser umfasst eine mehrschichtige Basis-Leiterplatte 3, die als mechanischer Grundkörper, als optische und elektrische Abschirmung, als Träger elektrischer Verbindungen und als Wärmeleiter dient. Durch diese multifunktionale Auslegung der Basis-Leiterplatte 3 kann vergleichsweise ein kleiner, leichter, kompakter und stabiler Laser-Entfernungsmesser kostengünstig hergestellt werden.

Die beiden Seiten der Basis-Leiterplatte 3 sind, soweit das mit den für den Laser-Entfernungsmesser notwendigen Komponenten möglich ist, zur Basis-Leiterplatte symmetrisch bestückt. Wesentliche Komponenten hierfür sind ein Lasersender 1.1, z. B. eine Laserdiode, und eine Sendeoptik 1.2, die gemeinsam auf einer Seite der Basis-Leiterplatte 3 angeordnet sind und den Sendekanal 1 mit einer Sendeachse 1.3 bilden, sowie ein Empfänger 2.1, z. B. eine Photodiode, und eine Empfangsoptik 2.2, die gemeinsam auf der anderen Seite der Basis-Leiterplatte 3 angeordnet sind und den Empfangskanal 2 mit einer Empfangsachse 2.3 bilden.
Die Sendeoptik 1.2 und die Empfangsoptik 2.2 sind, soweit das mit mechanischen Hilfsmitteln möglich ist, in einer Ebene bzw. in zueinander parallelen Ebenen liegend auf der Basis-Leiterplatte 3 aufgeklebt.
Der Lasersender 1.1 ist auf einer sogenannten Aufsatz-Leiterplatte 5 aufgebracht, bevorzugt gemeinsam mit einem hierfür erforderlichen Ansteuerelement. Der Empfänger 2.1 ist bevorzugt gemeinsam mit einer hiermit verbundenen Verstärkerstufe auf einer weiteren Aufsatz-Leiterplatte 5 montiert.
Die Begriffe Basis-Leiterplatte und Aufsatz-Leiterplatten wurden zur Unterscheidung der Leiterplatten gewählt. Dabei sollen Aufsatz-Leiterplatten an der Basis-Leiterplatte aufgesetzte Leiterplatten sein, unabhängig davon, wo und über welche Art der Verbindung sie mit der Basis-Leiterplatte verbunden sind.

Bei den Aufsatz-Leiterplatten 5 liegen die elektrischen Kontakte sämtlich auf einer Stirnseite. Über diese Stirnseite sind die Aufsatz-Leiterplatten 5 auf der Basis-Leiterplatte 3 auf dafür vorgesehenen Lötpunkten 4 mit Lötzinn aufgelötet.
Vor dem Auflöten wurden die Aufsatz-Leiterplatten 5 zur Sendeoptik 1.2 bzw. zur Empfangsoptik 2.2 justiert, sodass die Sendeachse 1.3 und die Empfangsachse 2.3 zueinander parallel ausgerichtet sind.

Weitere Komponenten des Laser-Entfernungsmessers wie z. B. ein Zeitmessschaltkreis und Steuereinheiten sind beidseitig auf der Basis-Leiterplatte 3 so verteilt, dass sie einen möglichst gleichmäßig verteilten Wärmeeintrag in die Basis-Leiterplatte 3 bewirken. Damit soll eine unterschiedliche Ausdehnung des Materials der Basis-Leiterplatte 3 an den sich gegenüberliegenden Seiten und damit ein Verziehen der Basis-Leiterplatte 3 vermeiden werden. Ein Verziehen der Basis-Leiterplatte 3 hätte unmittelbar eine Verkippung der Sende- und Empfangsachse 1.3, 2.3 zueinander zur Folge, was zur Untauglichkeit des Laser-Entfernungsmessers führen kann.
Alle Komponenten sind entweder über eine Klebe- oder Lötverbindung mechanisch stabil befestigt. Die Basis-Leiterplatte 3 ist eine Mehrlagen-Leiterplatte bestehend aus hierzu üblicherweise verwendeten Materialien. Zwischen einzelnen elektrisch nicht leitenden Schichten, hier aus faserverstärktem Epoxydharz, sind elektrisch leitende Schichten, gebildet von Leiterzügen sowie eine innen liegende durchgehende Kupferschicht 3.1, eingebracht. Die Kupferschicht 3.1 dient der optischen und elektrischen Abschirmung der beidseitig der Basis-Leiterplatte 3 angeordneten Komponenten, sowie der Wärmeleitung. Die von den einzelnen elektrischen und elektro-optischen Komponenten durch Verlustleitung entstehende Wärme, sowie die durch Absorption in den optischen Komponenten entstehende Wärme wird hauptsächlich in die Basis-Leiterplatte 3 eingeleitet, wo sie über die innere durchgehende Kupferschicht 3.1 zu Wärmesenken 6 geleitet wird. Bei den Wärmesenken 6 handelt es sich um Flächen, versehen mit einer dicken Kupferschicht, die auf den freien Bereichen der Oberfläche der Basis-Leiterplatte 3 aufgetragen sind. Die Lage der Komponenten, und damit unfreien Bereiche, sind bedingt durch deren Funktion und die notwendigen Abstände zueinander vorgegeben. Jedoch gibt es insbesondere im Bereich des Sende- und Empfangskanals 1, 2, wo keine weiteren Komponenten angeordnet werden können, große Flächen, die versehen mit der Kupferschicht als Wärmesenke dienen können.

### Bezugszeichenliste

- 1: Sendekanal
- 1.1: Lasersender
- 1.2: Sendeoptik
- 1.3: Sendeachse
- 2: Empfangskanal
- 2.1: Empfänger
- 2.2: Empfangsoptik
- 2.3: Empfangsachse
- 3: Basis-Leiterplatte
- 3.1: innen liegende durchgehende Kupferschicht
- 4: Lötpunkt
- 5: Aufsatz-Leiterplatte
- 6: Wärmesenke

## Patentansprüche

1. Laser-Entfernungsmesser mit einem Sendekanal (1) umfassend einen Lasersender (1.1) und eine Sendeoptik (1.2), die gemeinsam eine Sendeachse (1.3) definieren, und einem Empfangskanal (2) umfassend einen Empfänger (2.1) und eine Empfangsoptik (2.2), die gemeinsam eine Empfangsachse (2.3) definieren, die zur Sendeachse (1.3) parallel ausgerichtet ist, sowie einer für die Strahlung des Lasersenders (1.1) undurchlässige Leiterplatte (3), auf der der Lasersender (1.1) und der Empfänger (2.1) befestigt sind, wobei der Lasersender (1.1) und die Sendeoptik (1.2) auf einer Seite der Leiterplatte (3) und der Empfänger (2.1) und die Empfangsoptik (2.2) auf der anderen Seite der Leiterplatte (3) angeordnet sind, **dadurch gekennzeichnet,**
**dass** die Leiterplatte (3) eine mehrlagige formstabile Basis-Leiterplatte (3) ist, die dem Laser-Entfernungsmesser seine mechanische Stabilität gibt und auf der alle Komponenten des Laser-Entfernungsmessers befestigt sind, die Sendeoptik (1.2) und die Empfangsoptik (2.2) auf der Basis-Leiterplatte (3) aufgeklebt sind und der Lasersender (1.1) und der Empfänger (2.1) an jeweils einer Aufsatz-Leiterplatte (5) aufgebracht sind, die jeweils zur Sendeoptik (1.2) bzw. zur Empfangsoptik (2.2) justiert, über eine Stirnseite auf der Basis-Leiterplatte (3) auf Lötpunkten (4) aufgelötet sind, die eine Ausdehnung aufweisen, die größer ist als ein zur Justierung des Lasersenders (1.1) und des Empfängers (2.1) notwendiger Justierbereich.

2. Laser-Entfernungsmesser nach Anspruch 1, **dadurch gekennzeichnet,**
**dass** die Aufsatz-Leiterplatten (5) senkrecht auf der Basis-Leiterplatte (3) stehend mit den Lötpunkten (4) verbunden sind.

3. Laser-Entfernungsmesser nach Anspruch 1, **dadurch gekennzeichnet,**
**dass** der Lasersender (1.1) und der Empfänger (2.1), die Sendeoptik (1.2) und die Empfangsoptik (2.2) und gegebenenfalls weitere Komponenten in einer spiegelsymmetrischen Lage zur Basis-Leiterplatte (3) angeordnet sind, um die Basis-Leiterplatte (3) beidseitig gleichmäßig mechanisch und thermisch zu belasten.

4. Laser-Entfernungsmesser nach Anspruch 1, **dadurch gekennzeichnet,**
**dass** die Basis-Leiterplatte (3) aus mehreren sich abwechselnden elektrisch nicht leitenden und elektrisch leitenden Schichten besteht, wobei wenigstens eine der elektrisch leitenden Schichten eine innen liegende durchgängige Kupferschicht (3.1) ist, die als optische und elektrische Abschirmschicht dient.

5. Laser-Entfernungsmesser nach Anspruch 4, **dadurch gekennzeichnet,**
**dass** die elektrisch nicht leitfähigen Schichten aus einem glasfaserverstärkten Epoxydharz bestehen.

6. Laser-Entfernungsmesser nach Anspruch 4, **dadurch gekennzeichnet,**
**dass** die freien Oberflächenbereiche, auf denen keine Komponenten angeordnet sind, mit einer Kupferschicht überzogen sind, die als Wärmesenke (6) dient und mit der innen liegenden durchgängigen Kupferschicht (3.1) verbunden ist.

7. Laser-Entfernungsmesser nach Anspruch 1, **dadurch gekennzeichnet,**
**dass** auf der Basis-Leiterplatte (3) Steckverbinder vorgesehen sind, über die der Laser-Entfernungsmesser mit einem Rechner und einer Stromversorgung verbunden werden kann.

8. Laser-Entfernungsmesser nach Anspruch 1, **dadurch gekennzeichnet,**
**dass** die Sendeoptik (1.2) und die Empfangsoptik (2.2) aus transparentem Polymer bestehen und am Umfang eine ebenflächige Phase aufweisen, mit der die Sendeoptik (1.2) und die Empfangsoptik (2.2) jeweils auf die Basis-Leiterplatte (3) aufgeklebt sind.

## Claims

1. A laser distance measuring device with a transmission channel (1), comprising laser transmitter (1.1) and an optical transmission system (1.2) which together define a transmission axis (1.3), and a reception channel (2), comprising a receiver (2.1) and an optical reception system (2.2) which together define a reception axis (2.3), wherein said reception axis (2.3) is aligned parallel to the transmission axis (1.3), as well as a printed circuit board (3) which is opaque to the radiation of the laser transmitter (1.1) and upon which the laser transmitter (1.1) and the receiver (2.1) are mounted, wherein the laser transmitter (1.1) and the optical transmission system (1.2) are disposed on one side of the printed circuit board (3) and the receiver (2.1) and the optical reception system (2.2) are disposed on the other side of the printed circuit board (3),
**characterised in that**
the printed circuit board (3) is a dimensionally stable multilayer base printed circuit board (3) which imparts mechanical stability to the laser distance measuring device and on which all components of the laser distance measuring device are mounted, the optical transmission system (1.2) and the optical reception system (2.2) being bonded to the base printed circuit board (3) and the laser transmitter (1.1) and the receiver (2.1) each being attached to an adjoined printed circuit board (5), adjusted with respect to the optical transmission system (1.2) and the optical reception system (2.2), respectively, and having a front face soldered onto solder points (4) on the base printed circuit board (3), said solder points (4) having a dimension that is larger than an adjustment range which is required for adjustment of the laser transmitter (1.1) and the receiver (2.1).

2. The laser distance measuring device according to claim 1, **characterised in that** the adjoined printed circuit boards (5), oriented perpendicular to the base printed circuit board (3), are connected to the solder points (4).

3. The laser distance measuring device according to claim 1, **characterised in that** the laser transmitter (1.1) and the receiver (2.1), the optical transmission system (1.2) and the optical reception system (2.2) and, optionally, further components are arranged in a mirror-symmetric layout with respect to the base printed circuit board (3) so as to apply a uniform mechanical and thermal load on both sides of the base printed circuit board (3).

4. The laser distance measuring device according to claim 1, **characterised in that** the base printed circuit board (3) comprises a plurality of alternating electrically nonconductive and electrically conductive layers, with at least one of the electrically conductive layers being a full-surface inner copper layer (3.1) which serves as optical and electrical shielding layer.

5. The laser distance measuring device according to claim 4, **characterised in that** the electrically nonconductive layers are made of a fiberglass-reinforced epoxy resin.

6. The laser distance measuring device according to claim 4, **characterised in that** the free surface areas with no components arranged on them are coated with a copper layer which acts as a heat sink (6) and which is connected with the inner full-surface copper layer (3.1).

7. The laser distance measuring device according to claim 1, **characterised in that** plug-in connectors are provided on the base printed circuit board (3), for connecting the laser distance measuring device to a computer and an electrical power supply.

8. The laser distance measuring device according to claim 1, **characterised in that** the optical transmission system (1.2) and the optical reception system (2.2) are made of a transparent polymer and have a planar phase along their circumference, via which the optical transmission system (1.2) and the optical reception system (2.2) are each bonded to the base printed circuit board (3).

## Revendications

1. Dispositif de mesure d'éloignement à laser avec un canal d'émission (1), comportant un émetteur laser (1.1) et une optique d'émission (1.2) qui définissent ensemble un axe d'émission (1.3), et avec un canal de réception (2), comportant un récepteur (2.1) et une optique de réception (2.2) qui définissent ensemble un axe de réception (2.3) parallèle à l'axe d'émission (1.3), ainsi qu'une carte imprimée (3) qui est opaque pour le rayonnement de l'émetteur laser (1.1) et sur laquelle sont fixés l'émetteur laser (1.1) et le récepteur (2.1), l'émetteur laser (1.1) et l'optique d'émission (1.2) étant disposés d'un côté de la carte imprimée (3) et le récepteur (2.1) et l'optique de réception (2.2) étant disposés de l'autre côté de la carte imprimée (3),
**caractérisé en ce que**
la carte imprimée (3) est une carte imprimée de base (3) à plusieurs couches et à dimensions stables, qui donne au dispositif de mesure d'éloignement à laser sa stabilité mécanique et sur laquelle sont fixés tous les composants du dispositif de mesure d'éloignement à laser,
l'optique d'émission (1.2) et l'optique de réception (2.2) sont collées sur la carte imprimée de base (3), et l'émetteur laser (1.1) et le récepteur (2.1) sont chacun montés sur une carte imprimée superposée (5) respective, lesdits cartes imprimées superposées (5), ajustées respectivement par rapport à l'optique d'émission (1.2) et par rapport à l'optique de réception (2.2), étant soudées par une face sur la carte imprimée de base (3), sur des points de soudage (4) dont l'extension est supérieure à une plage de réglage nécessaire pour le réglage de l'émetteur laser (1.1) et du récepteur (2.1).

2. Dispositif de mesure d'éloignement à laser selon la revendication 1, **caractérisé en ce que** les circuits imprimés superposés (5) sont reliés aux points de soudage (4) en position verticale par rapport au circuit imprimé de base (3).

3. Dispositif de mesure d'éloignement à laser selon la revendication 1, **caractérisé en ce que** l'émetteur laser (1.1) et le récepteur (2.1), l'optique d'émission (1.2) et l'optique de réception (2.2) et, le cas échéant, d'autres composants, sont disposés en symétrie miroir par rapport à la carte imprimée de base (3) afin de soumettre les deux côtés de la carte imprimée de base (3) à des charges mécaniques et thermiques uniformes.

4. Dispositif de mesure d'éloignement à laser selon la revendication 1, **caractérisé en ce que** la carte imprimée de base (3) consiste en plusieurs couches non-conductrices et conductrices d'électricité, disposées en alternance, au moins une des couches conductrices d'électricité étant une couche de cuivre (3.1) continue intérieure qui sert de couche de protection optique et électrique.

5. Dispositif de mesure d'éloignement à laser selon la revendication 4, **caractérisé en ce que** les couches non-conductrices d'électricité sont réalisées en résine époxyde renforcée avec des fibres de verre.

6. Dispositif de mesure d'éloignement à laser selon la revendication 4, **caractérisé en ce que** les régions libres de la surface sur lesquelles aucun composé est disposé, sont revêtues d'une couche de cuivre qui sert de dissipateur thermique (6) et qui est relié à la couche de cuivre (3.1) continue intérieure.

7. Dispositif de mesure d'éloignement à laser selon la revendication 1, **caractérisé en ce que** l'on prévoit sur la carte imprimée de base (3) des connecteurs permettant de relier le dispositif de mesure d'éloignement à laser avec un ordinateur ou une alimentation électrique.

8. Dispositif de mesure d'éloignement à laser selon la revendication 1, **caractérisé en ce que** l'optique d'émission (1.2) et l'optique de réception (2.2) sont réalisées en polymère transparent et présentent, sur leurs circonférences, une phase planaire par laquelle l'optique d'émission (1.2) et l'optique de réception (2.2) sont chacune collées sur la carte imprimée de base (3).
